# EUROPEAN PATENT APPLICATION

(11) **EP 4 811 854 A1**
(43) Date of publication of application: **23.09.2026**
(21) Application number: 24906190.4
(22) Date of filing: 10.12.2024
(51) Int. Cl.: H04W 24/08, H04W 84/06

(54) **COMMUNICATION METHOD AND APPARATUS**

(30) Priority: 19.12.2023 CN 202311758418
(71) Applicant: Huawei Technologies Co., Ltd., Shenzhen, Guangdong 518129 (CN)
(72) Inventor: MAO, Jianpeng, Shenzhen, Guangdong 518129 (CN); CHEN, Qucai, Shenzhen, Guangdong 518129 (CN); ZHAO, Zhixiang, Shenzhen, Guangdong 518129 (CN); HAN, Xiaojiang, Shenzhen, Guangdong 518129 (CN)
(74) Representative: Pfenning, Meinig & Partner mbB
(86) International application number: PCT/CN2024/138239
(87) International publication number: WO 2025/130707

(57) **Abstract**

A communication method and an apparatus are provided. The method includes: A first satellite-borne base station determines a first grid area in which a first terminal device accessing the first satellite-borne base station is located, then obtains measurement data corresponding to the first terminal device, and establishes a correspondence between the measurement data and the first grid area (that is, the measurement data corresponds to the first grid area). In this way, statistics on measurement data of N terminal devices corresponding to the first grid area within a first time period can be collected, thereby obtaining a statistical result of the measurement data corresponding to the first grid area. The statistical result of the measurement data corresponding to the first grid area is then sent to a first device. Accordingly, the first satellite-borne base station collects statistics on measurement data for a grid area, or collects statistics on measurement data at grid granularity, which is equivalent to collecting statistics on measurement data for a fixed physical ground area.

## Description

### CROSS-REFERENCE TO RELATED APPLICATIONS

This application claims priority to Chinese Patent Application No. 202311758418.4, filed with the China National Intellectual Property Administration on December 19, 2023 and entitled "COMMUNICATION METHOD AND APPARATUS", which is incorporated herein by reference in its entirety.

### TECHNICAL FIELD

This application relates to the field of wireless communication technologies, and in particular, to a communication method and an apparatus.

### BACKGROUND

Network performance of a physical ground area can be analyzed by collecting statistics on measurement data of terminal devices within the physical ground area, in order to determine whether processing such as capacity expansion, optimization, and problem locating needs to be performed on the network resources in the physical ground area.

In a satellite communication system, as a satellite moves, its coverage area changes relative to the ground. Consequently, the coverage area of the satellite cannot continuously correspond to a single physical ground area; in other words, a satellite does not cover the same physical ground area exclusively. Therefore, it is impossible to continuously collect statistics on measurement data for a physical ground area using the satellite, making it difficult to analyze network performance of that area.

### SUMMARY

Embodiments of this application provide a communication method and an apparatus, for collecting statistics on measurement data corresponding to a grid area, thereby enabling analysis of network performance of a fixed physical ground area based on the measurement data corresponding to the grid area.

According to a first aspect, this application provides a communication method. The method is applied to a satellite-borne base station. The following describes the method using a first satellite-borne base station in M satellite-borne base stations as an execution entity. The method includes the following steps.

The first satellite-borne base station determines a first grid area in which a first terminal device accessing the first satellite-borne base station is located, obtains measurement data corresponding to the first terminal device, establishes a correspondence between the measurement data and the first grid area (that is, the measurement data corresponds to the first grid area), so that statistics on measurement data of N terminal devices corresponding to the first grid area within a first time period can be collected, to obtain a statistical result of the measurement data corresponding to the first grid area, and finally, sends the statistical result of the measurement data corresponding to the first grid area to a first device. The N terminal devices include the first terminal device, and N is an integer greater than or equal to 1.

In the method, the first grid area is a physical ground area, and the physical ground area represented by the first grid area is unique. Because there is a correspondence between measurement data corresponding to a terminal device and a grid area, which is equivalent to a correspondence between a terminal device and a grid area in which the terminal device is located, the correspondence may represent measurement data of a terminal device in a grid area. Based on this, the first satellite-borne base station may determine measurement data of a terminal device in the first grid area based on the correspondence, and collect statistics on the measurement data corresponding to the first grid area. Therefore, the first satellite-borne base station collects statistics on measurement data for a grid area, or collects statistics on measurement data at grid granularity, which is equivalent to collecting statistics on measurement data for a fixed physical ground area.

Optionally, the first device receives the statistical result of the measurement data corresponding to the first grid area from the first satellite-borne base station, and then may determine, based on statistical results of measurement data that correspond to the first grid area and are sent by the M satellite-borne base stations, a performance indicator corresponding to the first grid area to analyze network performance of the first grid area or analyze network performance of the physical ground area corresponding to the first grid area. The M satellite-borne base stations include the first satellite-borne base station, and M is an integer greater than or equal to 1.

In a possible design, the first satellite-borne base station determines an identifier of a first cell to which the first terminal device is connected, and then determines, based on first mapping relationship information, an identifier of the first grid area corresponding to the identifier of the first cell, where the first mapping relationship information indicates a correspondence, at different time points, between an identifier of a cell of the first satellite-borne base station and a grid area, and the identifier of the cell of the first satellite-borne base station remains unchanged.

In the method, there is a binding relationship between the first satellite-borne base station and an identifier of a cell, which is equivalent to that as time progresses, satellite-borne base stations covering the first grid area are different. Therefore, the first grid area corresponds to different identifiers of cells. Therefore, the first satellite-borne base station may determine the terminal device in the first grid area in a time dimension.

In a possible design, the first mapping relationship information is determined based on ephemeris information of a satellite on which the first satellite-borne base station is located.

In a possible design, the first satellite-borne base station determines an identifier of a first cell to which the first terminal device is connected, and then determines, based on second mapping relationship information, an identifier of the first grid area corresponding to the identifier of the first cell, where the second mapping relationship information indicates a correspondence, at different time points, between an identifier of a cell of the first satellite-borne base station and a grid area, and the identifier of the cell of the first satellite-borne base station is associated with a position of the first satellite-borne base station.

In the method, as time progresses, based on a position change of the first satellite-borne base station, an identifier of a cell served by the first satellite-borne base station changes, but an identifier of a cell corresponding to the first grid area remains unchanged. That is, there is a binding relationship between an identifier of a grid area and an identifier of a cell, which is equivalent to that as time progresses, although satellite-borne base stations covering the first grid area are different, the identifier of the cell corresponding to the first grid area remains unchanged. Therefore, the first satellite-borne base station may serve cells with different identifiers in a time dimension, to determine the terminal device in the first grid area based on the identifier of the cell corresponding to the identifier of the first grid area.

In a possible design, the second mapping relationship information is determined based on ephemeris information of a satellite on which the first satellite-borne base station is located.

In a possible design, the first grid area is greater than or equal to a coverage area of a single beam of the first satellite-borne base station.

Therefore, fine-grained statistics on the performance indicator of the first grid area are achieved.

In a possible design, the first satellite-borne base station may send a measurement request message to the first terminal device and then receive the measurement data sent by the first terminal device.

In a possible design, the measurement data corresponding to the first terminal device includes one or more of the following:
hardware measurement data, indicating hardware performance or a hardware capability of the first terminal device;
transmission measurement data, indicating data transmission performance between the first terminal device and the first satellite-borne base station; and
cell measurement data, indicating network communication performance of the cell of the first satellite-borne base station.

According to a second aspect, this application provides an apparatus, including units configured to perform the steps in the first aspect. Optionally, the apparatus may include a communication unit and a processing unit. The communication unit is configured to receive and send data, and the processing unit is configured to perform the method provided in the first aspect.

According to a third aspect, an embodiment of this application provides a device, including a transceiver and a processor. The transceiver is configured to receive and send signals. The processor is configured to execute a program instruction, to enable the communication device to perform the method provided in the first aspect or the second aspect. Optionally, the communication device further includes a memory. The memory is configured to store the program instruction. The processor may read the program instruction in the memory, to enable the communication device to perform the method provided in the first aspect.

According to a fourth aspect, an embodiment of this application provides a device, including at least one processing element and at least one storage element. The at least one storage element is configured to store a program and data. The at least one processing element is configured to perform the method provided in the first aspect.

According to a fifth aspect, an embodiment of this application provides a system, including a satellite-borne base station configured to perform the first aspect.

According to a sixth aspect, an embodiment of this application further provides a computer program product. When the computer program product runs on a computer, the computer is enabled to perform the method provided in the first aspect. Optionally, the computer may be a communication device such as a terminal device or a network device.

According to a seventh aspect, an embodiment of this application provides a computer-readable storage medium. The computer-readable storage medium stores program code. When the program code is run on a computer, the computer is enabled to perform the method provided in the first aspect. Optionally, the computer may be a communication device such as a network device or a terminal device.

According to an eighth aspect, an embodiment of this application provides a chip. The chip is coupled to a memory, and is configured to read and execute program instructions stored in the memory, to implement the method provided in the first aspect.

According to a ninth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

Based on the implementations provided in the foregoing aspects, embodiments of this application may be further combined to provide more implementations.

For technical effects that can be achieved in any one of the second aspect to the ninth aspect, refer to descriptions of technical effects that can be achieved in the first aspect. Details are not described herein again.

### BRIEF DESCRIPTION OF DRAWINGS

FIG. 1 is a diagram of a general method for collecting statistics on a performance indicator to which an embodiment of this application is applicable;
FIG. 2 is diagram of satellite coverage to which an embodiment of this application is applicable;
FIG. 3 is a diagram of a system architecture to which an embodiment of this application is applicable;
FIG. 4 is a diagram of satellite coverage according to an embodiment of this application;
FIG. 5 is a diagram of satellite coverage according to an embodiment of this application;
FIG. 6 is a schematic flowchart of a communication method according to an embodiment of this application;
FIG. 7 is a diagram of a grid area according to an embodiment of this application;
FIG. 8 is a diagram of satellite coverage according to an embodiment of this application;
FIG. 9 is a diagram of statistics of a performance indicator according to an embodiment of this application;
FIG. 10 is a diagram of a structure of an apparatus according to an embodiment of this application; and
FIG. 11 is a diagram of a structure of a device according to an embodiment of this application.

### DESCRIPTION OF EMBODIMENTS

The following clearly and completely describes technical solutions in embodiments of this application with reference to accompanying drawings in embodiments of this application. Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "one embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to the same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

"A plurality of" in embodiments of this application means "greater than or equal to two". It should be noted that in the descriptions of embodiments of this application, the terms such as "first" and "second" are merely intended for distinction in description, but should not be construed as indicating or implying relative importance or indicating or implying a sequence.

To better describe a communication method provided in embodiments of this application, concepts and terms in embodiments of this application are first briefly described.
(1) A cell, also referred to as a cellular cell, is an area covered by a base station or a part (a sector antenna) of a base station in a communication system. In this area, a terminal device may communicate with a network device via a radio channel.
(2) A terminal device is a device that provides voice and/or data connectivity for a user and can access a network device through a wireless interface. The terminal device may also be referred to as user equipment (user equipment, UE), a mobile station (mobile station, MS), a mobile terminal (mobile terminal, MT), or the like. In this application, the terminal device may be at a fixed position, or may be mobile. This is not limited in this application.
(3) A performance indicator, also referred to as a traffic statistics indicator, is a basic basis for analyzing network performance, and includes three elements: time, measurement data (or referred to as a measurement indicator), and a measurement object. The time represents time information such as start, duration, and periodicity of network performance measurement. The measurement data is data that represents network performance in a network, and is data required for network performance measurement, such as a communication delay, a quantity of paging successes, a quantity of paging failures, CPU load, packet traffic, CPU usage, and average occupation duration of a terminal device. The measurement object represents various physical or logical entities (for example, a CPU, a port, a common control component, an auxiliary component, and a destination) and a combination thereof for performance indicator measurement. Refer to the following performance indicators shown in Table 1:

**Table 1**

| Measurement object | Performance indicator type | Measurement type |
|---|---|---|
| Object 1 | NR type | Cell measurement |
| | | DU cell measurement |
| | | gNodeB measurement |
| | | Neighboring cell measurement |
| | | Cell operator measurement |
| | | Radio coverage area measurement |
| | | ... |
| | Device type | ... |
| | Transmission type | ... |
| Object 2 | ... | ... |
| ... | ... | ... |

It may be understood that the foregoing Table 1 is described using an example in which the measurement object is the object 1. The performance indicator of the new radio (new radio, NR) type may include cell measurement, distributed unit (Distributed Unit, DU) cell measurement, next generation NodeB (next generation NodeB, gNB) measurement in a 5th generation (5th generation, 5G) mobile communication system, neighboring cell measurement, cell operator measurement, radio coverage area measurement, and the like. The performance indicator of the device type may include CPU performance measurement, interface performance measurement, and the like. The measurement type of the performance indicator of the transmission type may include traffic measurement, packet loss rate measurement, and the like.

Based on this, measurement data of the performance indicator of the NR type may include a congestion rate, a call drop rate, a handover success rate, a paging success rate, a quantity of users in a 5G cell, a user access success rate, a peak data rate, a transmission rate, a block error rate, a bit error rate, a channel bandwidth, a channel capacity, a delay, a propagation delay-bandwidth product, a round-trip delay, and the like. Measurement data of the performance indicator of the device type may include CPU load, CPU usage, and the like. Optionally, measurement data of the performance indicator of the transmission type may include IP packet traffic volume, a packet loss rate, and the like.

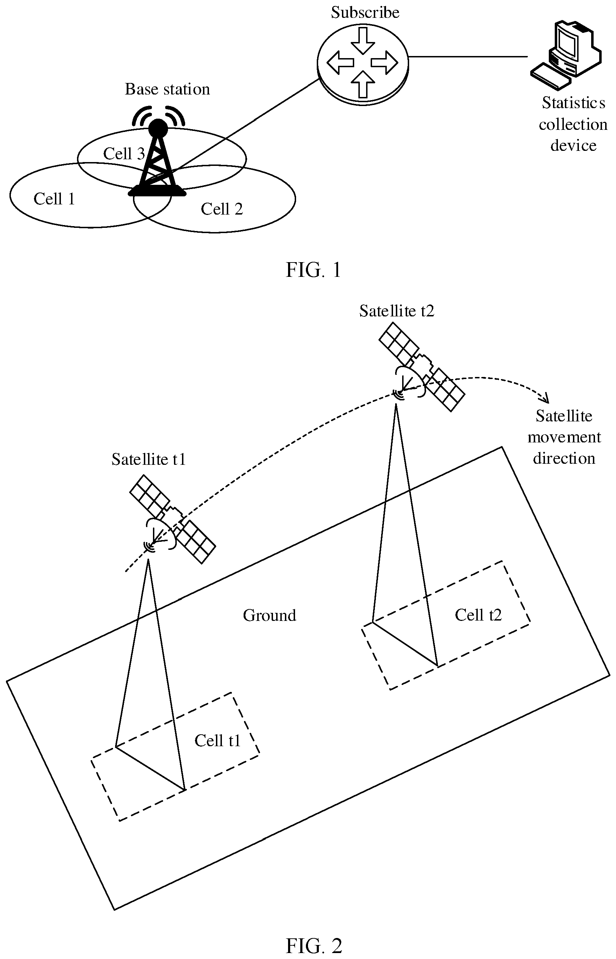

In a terrestrial network (Terrestrial Network, TN) communication system, a running status of a network (including 2G/3G/4G/5G) may be evaluated using a performance indicator provided by a base station, to determine whether processing such as capacity expansion, optimization, and problem locating needs to be performed on use of network resources. Cells in the TN communication system are planned based on areas, or in other words, IDs of the cells and physical ground areas are in a one-to-one correspondence. Therefore, performance indicators of a network device (for example, the base station) and the cells in the TN communication system may represent network performance of coverage areas of the cells and the base station. Refer to FIG. 1. An example in which a test object is a base station is used. A coverage area of the base station includes a cell 1, a cell 2, and a cell 3. The cell 1, the cell 2, and the cell 3 respectively correspond one-to-one to a cell 1 (or an area 1), a cell 2 (or an area 2), and a cell 3 (or an area 3) in a physical ground area. Therefore, the base station may determine a performance indicator of the base station based on measurement data of terminal devices in the cell 1, the cell 2, and the cell 3 and the base station in a test time period, to evaluate network performance of the base station.

In a non-terrestrial network (Non-Terrestrial Network, NTN) communication system, a network is established using a non-terrestrial communications technology, for example, a network that uses spectrum resources on a communication platform such as a satellite platform, an unmanned aerial vehicle (unmanned aerial vehicle, UAV) platform, or a high altitude communication platform (high altitude platform station, HAPS) to perform a communication service. For example, an NTN may include but is not limited to a satellite communication system, a UAV communication system, and a HAPS system. According to the altitude of the satellite from the earth surface (that is, the altitude of the satellite orbit), the satellite communication system may be classified into a geostationary orbit (geostationary orbit, GEO) satellite communication system, a medium earth orbit (medium earth orbit, MEO) satellite communication system, and a low earth orbit (LEO) satellite communication system.

A low-earth orbit satellite communication system (referred to as a low-orbit satellite communication system) is used as an example. In the low-orbit satellite communication system, as a low-orbit satellite moves, a coverage area of the low-orbit satellite changes relative to the ground. Refer to FIG. 2. An area of a coverage area (referred to as a cell t1 in the figure) corresponding to the low-orbit satellite (referred to as a satellite t1 in the figure) at a time point t1 on the ground is different from an area of a coverage area (referred to as a cell t2 in the figure) corresponding to the low-orbit satellite (referred to as a satellite t2 in the figure) at a time point t2 on the ground. As a result, the coverage areas of the low-orbit satellite cannot correspond one-to-one to areas on the ground. Based on this, the low-orbit satellite does not continuously communicate with a terminal device in the area. Therefore, measurement data for a fixed physical ground area cannot be continuously determined, and a performance indicator of the fixed physical ground area cannot be determined. In other words, network performance of a measurement object in the fixed physical ground area cannot be determined. In addition, because a coverage area of a low-orbit satellite is very large and the area usually includes a plurality of measurement objects, a performance indicator corresponding to a measurement object cannot be determined in a fine-grained manner, and network performance of a measurement object cannot be analyzed in a fine-grained manner.

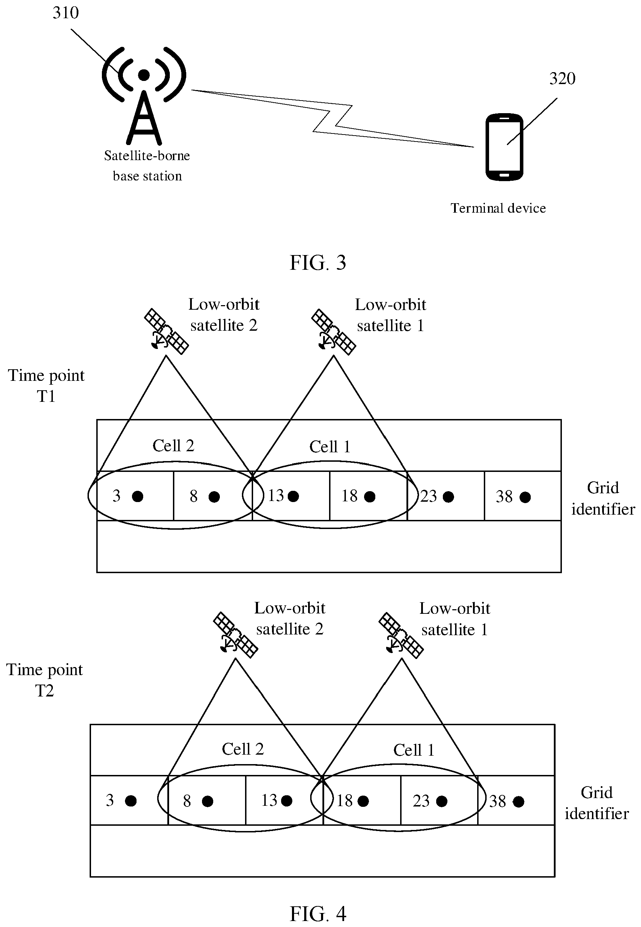

Therefore, this application provides a communication method, to collect statistics on a performance indicator of each grid area in a physical ground area in a satellite communication system, and analyze network performance of a fixed physical ground area at grid granularity. The method may be applied to a satellite-borne base station that communicates with a terminal device. FIG. 3 is a diagram of a system architecture to which an embodiment of this application is applicable. The system architecture includes a satellite-borne base station 310 and a terminal device 320. The satellite-borne base station 310 may also be referred to as a satellite-borne RAN (Radio Access Network, radio access network) device. An execution entity of embodiments of this application is not limited herein.

The terminal device 320 includes but is not limited to UE, a mobile station (mobile station, MS), a mobile terminal (mobile terminal, MT), or the like. The terminal device may be applied to at least one of the following scenarios for communication: eMBB, ultra-reliable low-latency communication (ultra-reliable low-latency communication, URLLC), mMTC, device-to-device (device-to-device, D2D), vehicle-to-everything (vehicle-to-everything, V2X), machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. A specific technology and a specific device form that are used by the terminal device 320 are not limited herein in this application.

It may be understood that the technical solutions of this application may be applied to various communication systems, for example, a long term evolution (long term evolution, LTE) system, a 5G system or a new radio (new radio, NR) system, a non-terrestrial network (non-terrestrial network, NTN), and a future communication system, for example, a sixth generation mobile communication system. This is not limited in this application.

Before embodiments of this application are described in detail, satellite communication scenarios to which embodiments of this application are applicable are first described.

Scenario 1: Refer to FIG. 4. A low-orbit satellite communication system includes a low-orbit satellite 1 and a low-orbit satellite 2. At a time point T1, a coverage area (a cell 1) of the low-orbit satellite 1 includes grid areas whose grid identifiers are "13" and "18", and a coverage area (a cell 2) of the low-orbit satellite 2 includes grid areas whose grid identifiers are "3" and "8". At a time point T2, the coverage area (the cell 1) of the low-orbit satellite 1 includes grid areas whose grid identifiers are "18" and "23", and the coverage area of the low-orbit satellite 2 (the cell 2) includes the grid areas whose grid identifiers are "8" and "13". It can be learned that IDs of cells (cells) correspond one-to-one (or are bound) to low-orbit satellites. As a low-orbit satellite moves, an ID of a cell corresponding to any grid area changes. For example, the grid area whose grid identifier is "13" corresponds to a cell 1 at the time point T1 and corresponds to a cell 2 at the time point T2. That is, the same physical area is covered by different cells (the cells have different PCIs) at different time.

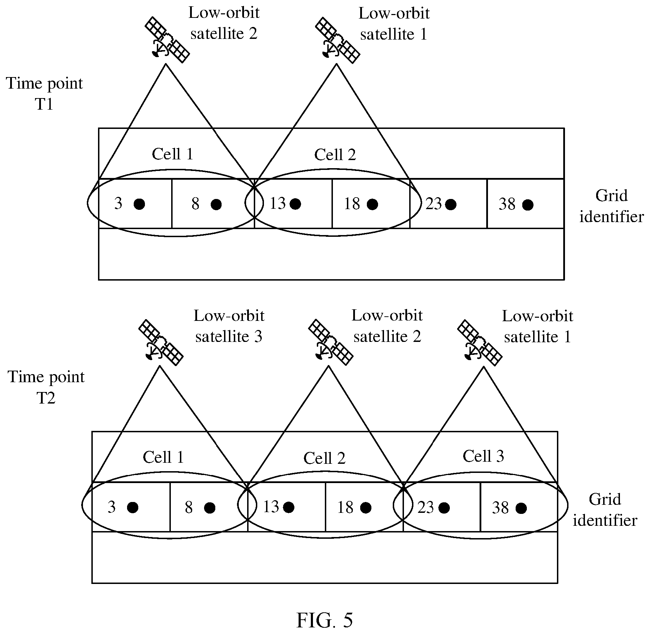

Scenario 2: Refer to FIG. 5. A low-orbit satellite communication system includes a low-orbit satellite 1, a low-orbit satellite 2, and a low-orbit satellite 3. At a time point T1, the low-orbit satellite 2 covers a cell (cell) 1, and the low-orbit satellite 1 covers a cell 2. At a time point T2, the low-orbit satellite 2 covers the cell 2, the low-orbit satellite 3 covers the cell 1, and the low-orbit satellite 1 covers a cell 3. At both the time point T1 and the time point T2, the cell (cell) 1 corresponds to grid areas whose grid identifiers are "3" and "8", the cell (cell) 2 corresponds to grid areas whose grid identifiers are "13" and "18", and the cell (cell) 3 corresponds to grid areas whose grid identifiers are "23" and "28". It can be learned that the IDs of the cells (cells) and the grid areas correspond to each other (or are bound to each other), which is equivalent to that the IDs of the cells are bound to physical ground areas. As a low-orbit satellite moves, when a coverage area of the low-orbit satellite no longer covers a cell, another low-orbit satellite continues to cover the cell using a corresponding ID of the cell, and an ID of a cell corresponding to a grid area does not change with the movement of the low-orbit satellite. For example, the cell (cell) 2 is covered by the low-orbit satellite 1 at the time point T1 and is covered by the low-orbit satellite 2 at the time point T2. The grid identifiers corresponding to the cell (cell) 2 are "13" and "18" at both the time point T1 and the time point T2. That is, the same physical area is covered by the same cell (the cells have different PCIs) at different time, but the same cell corresponds to different low-orbit satellites at different time.

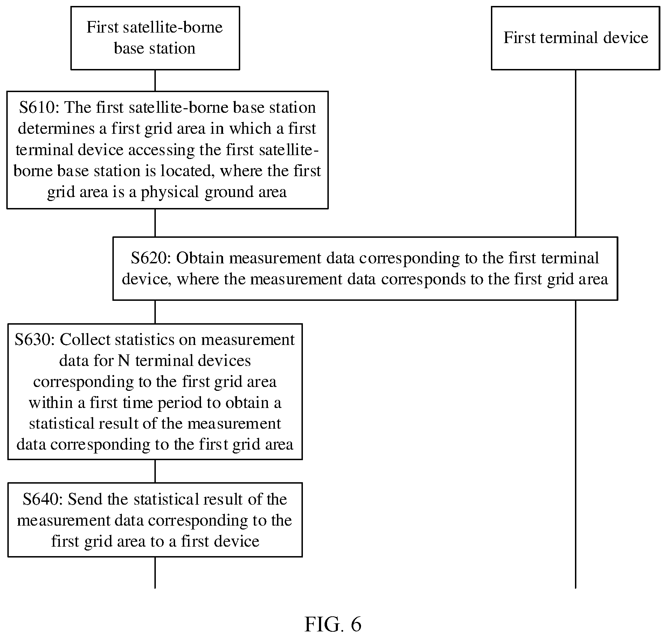

With reference to the foregoing two scenarios, the following describes an embodiment of this application in detail using a first satellite-borne base station of satellite-borne base stations corresponding to M satellites as an execution entity. Refer to FIG. 6. A procedure includes the following steps.

S610: The first satellite-borne base station determines a first grid area in which a first terminal device accessing the first satellite-borne base station is located, where the first grid area is a physical ground area.

S620: The first satellite-borne base station obtains measurement data corresponding to the first terminal device, where the measurement data corresponds to the first grid area.

S630: The first satellite-borne base station collects statistics on measurement data of N terminal devices corresponding to the first grid area within a first time period, to obtain a statistical result of the measurement data corresponding to the first grid area, where the N terminal devices include the first terminal device, and N is an integer greater than or equal to 1.

S640: The first satellite-borne base station sends the statistical result of the measurement data corresponding to the first grid area to a first device.

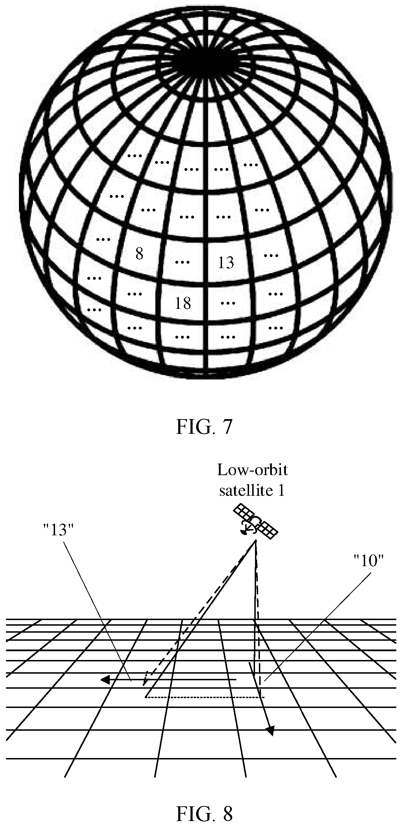

In this embodiment of this application, grid areas are obtained by dividing the ground based on longitude and latitude information. Refer to FIG. 7. The ground is divided into a plurality of cells based on a longitude and a latitude with preset units. Any cell represents one grid area, that is, any grid area has unique longitude and latitude position information. Each grid area includes a unique identifier. For example, grid areas correspond to identifiers "8", "13", and "18", respectively. The preset units of longitude and latitude may be set according to different requirements. This is not limited.

In S610, when accessing a network, a terminal device selects an ID of a cell to be connected. Based on this, the first satellite-borne base station may determine, based on the ID of the cell to which the terminal device is connected, an identifier of a grid area corresponding to the ID of the cell to which the terminal device is connected, to determine the grid area in which the terminal device is located. Optionally, a manner in which the terminal device accesses a satellite-borne base station may be a random access manner. This is not limited in this application.

In a possible implementation, the first satellite-borne base station determines, based on first mapping relationship information, an identifier of the first grid area corresponding to the identifier of the first cell, where the first mapping relationship information indicates a correspondence, at different time, between an identifier of a cell of the first satellite-borne base station and a grid area, and the identifier of the cell of the first satellite-borne base station remains unchanged. For example, in the scenario in FIG. 4, the first satellite-borne base station (it is assumed that the first satellite-borne base station is a satellite-borne base station corresponding to the low-orbit satellite 2 in this case) determines that an ID of a cell to which the terminal device is connected is the cell 2 and an identifier of a grid area corresponding to the cell 2 in this case is "8", and then determines that a grid area in which the terminal device is located is an area corresponding to the identifier "8".

In addition, the first mapping relationship information is pre-determined based on ephemeris information of a satellite of a first satellite-borne base station, where the ephemeris information of the satellite includes position information, speed information, and beam azimuth information of the satellite. Because each grid area has unique longitude and latitude position information, the first satellite-borne base station may establish a mapping relationship with each grid area in a time dimension based on ephemeris information of a corresponding satellite. The following describes the first mapping relationship information with reference to FIG. 4.

Refer to FIG. 4. It is assumed that an identifier of the grid area in which the terminal device is located is "13", and the first satellite-borne base station is a base station on a first satellite (the low-orbit satellite 1 is used as an example below) in the M satellites. The first satellite-borne base station may determine, based on position information, speed information, and beam azimuth information (or sub-satellite point information) of the low-orbit satellite 1, a first time period in which the low-orbit satellite 1 covers the grid area with an identifier of "13". Refer to FIG. 8. It is assumed that a grid area with an identifier of "10" covered by the low-orbit satellite 1 is determined based on the position information of the low-orbit satellite 1, and a first start time point (for example, 11:00) and a first end time point (for example, 11:05) that correspond to the grid area with an identifier of "10" covered by the low-orbit satellite 1 are determined. Next, a time (for example, 1 h) required for the low-orbit satellite 1 to move to the grid area with an identifier of "13" is determined based on a distance between the grid area with an identifier of "10" and the grid area with an identifier of "13" and the speed information of the low-orbit satellite 1, and then a second start time point (for example, 12:00) and a second end time point (for example, 12:05) corresponding to the grid area with an identifier of "13" covered by the low-orbit satellite 1 may be determined based on the first start time point (for example, 11:00), the first end time point (for example, 11:05), and the required time (for example, 1 hour), and the first time period (12:00-12:05) in which the low-orbit satellite 1 covers the grid area with an identifier of "13" is obtained.

Based on the foregoing description, the first satellite-borne base station may establish a mapping relationship between the identifier ("13") of the grid area and a combination of the ID of the cell (or the ID of the cell corresponding to the first satellite-borne base station) corresponding to the first satellite and the first time period (12:00-12:05) in which the first satellite covers the grid area. According to the same technical solution, the first satellite-borne base station may establish a mapping relationship between identifiers of P grid areas covered by the first satellite and combinations of the ID of the cell corresponding to the first satellite-borne base station and corresponding time periods in which the first satellite covers the P grid areas. Based on this, the first mapping relationship information corresponding to the satellite-borne base station of the low-orbit satellite 1 includes: the first time period in which the cell with the ID (the cell 1) corresponding to the low-orbit satellite 1 covers the grid area "13" is (12:00-12:05), and the first time period in which the cell with the ID corresponding to the low-orbit satellite 1 covers the grid area "23" is (12:05-12:10), ...

Similarly, any one of M satellite-borne base stations may establish corresponding first mapping relationship information. For example, the first mapping relationship information corresponding to the satellite-borne base station of the low-orbit satellite 2 includes: the first time period in which the cell with the ID (the cell 2) corresponding to the low-orbit satellite 2 covers the grid area "8" is (12:05-12:10), and the first time period in which the cell with the ID corresponding to the low-orbit satellite 2 covers the grid area "18" is (12:10-12:15), ...

In another possible implementation, the first satellite-borne base station determines, based on second mapping relationship information, an identifier of the first grid area corresponding to the identifier of the first cell, where the second mapping relationship information indicates a correspondence, at different time, between an identifier of a cell of the first satellite-borne base station and a grid area, and the identifier of the cell of the first satellite-borne base station is associated with a position of the first satellite-borne base station. For example, in the scenario in FIG. 5, the first satellite-borne base station (it is assumed that the first satellite-borne base station is a satellite-borne base station corresponding to the low-orbit satellite 2 in this case) determines that an ID of a cell to which the terminal device is connected is the cell 2 and an identifier of a grid area corresponding to the cell 2 in this case is "18", and then determines that a grid area in which the terminal device is located is an area corresponding to the identifier "18".

In addition, the second mapping relationship information may also be pre-determined based on ephemeris information of a satellite of the first satellite-borne base station. Therefore, the first satellite-borne base station may establish a mapping relationship with each grid area in a time dimension based on ephemeris information of a corresponding satellite. Based on the foregoing described solution, similarly, the following describes the second mapping relationship information with reference to FIG. 5.

Refer to FIG. 5. The second mapping relationship information corresponding to the satellite-borne base station of the low-orbit satellite 1 includes: the ID (the cell 2) of the cell that covers the grid area "13", and the second time period in which the low-orbit satellite 1 serves the cell with the ID (the cell 2) being (13:00-13:10); the ID (the cell 3) of the cell that covers the grid area "23", and the second time period in which the low-orbit satellite 1 serves the cell with the ID (the cell 3) being (13:10-13:20); ...

Similarly, any one of the M satellite-borne base stations may establish corresponding second mapping relationship information. For example, the second mapping relationship information corresponding to the satellite-borne base station of the low-orbit satellite 2 includes: the ID (the cell 2) of the cell that covers the grid area "13", and the second time period in which the low-orbit satellite 2 serves the cell with the ID (the cell 2) being (13:10-13:20); the ID (the cell 3) of the cell that covers the grid area "23", and the second time period in which the low-orbit satellite 2 serves the cell with the ID (the cell 3) being (13:20-13:30); ...

Therefore, when accessed by a terminal device, each satellite-borne base station can determine a grid area in which the terminal device is located. In addition, in this embodiment of the present invention, any grid area is greater than or equal to a coverage area of a single beam of a satellite, thereby achieving fine-grained statistics on a performance indicator of a physical ground area.

In S620, the first satellite-borne base station may send a measurement request message to the terminal device and then receive the measurement data sent by the terminal device. The measurement data includes one or more of the following:
hardware measurement data, indicating hardware performance or a hardware capability of the first terminal device;
transmission measurement data, indicating data transmission performance between the first terminal device and the first satellite-borne base station; and
cell measurement data, indicating network communication performance of a cell of the first satellite-borne base station.

Refer Table 1. The hardware measurement data is equivalent to the measurement data of the performance indicator of the device type, the transmission measurement data is equivalent to the measurement data of the performance indicator of the transmission type, and the cell measurement data is equivalent to the measurement data of the performance indicator of the NR type. Specific measurement data is not limited in this application.

In S630, the first time period may be determined based on the time period in which the first satellite-borne base station covers the first grid area. For example, the first time period is less than or equal to the time period in which the first satellite-borne base station covers the first grid area. This is not limited in this application.

Optionally, the measurement data of each terminal device further includes a corresponding measurement time. It is assumed that the first grid area includes N terminal devices. The first satellite-borne base station may integrate the measurement data of the N terminal devices based on the measurement time corresponding to the measurement data of the N terminal devices to obtain the statistical result of the measurement data corresponding to the first grid area. For example, a measurement time corresponding to measurement data of a terminal device UE 1 is 12:00, a measurement time corresponding to measurement data of a terminal device UE 2 is 12:01, and the terminal device UE 1 and the terminal device UE 2 are located in a grid area with an identifier of "13". Therefore, the statistical result of the measurement data corresponding to the first grid area may be represented as: measurement data x1-"13"-12:00 of the terminal device UE 1, and measurement data x2-"13"-12:01 of the terminal device UE 2.

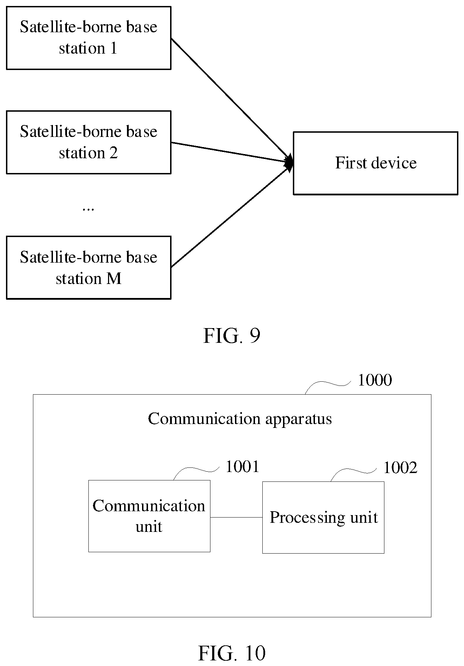

In S640, the first device may be a core network element. The following uses an example in which the first device is a terrestrial network management (MBB Automation Engine, MAE, and mobile broadband (Mobile Broadband, MBB)) platform for description. Refer to FIG. 9. Satellite-borne base stations (including a satellite-borne base station 1 (S-gNB_1), a satellite-borne base station 2 (S-gNB_2), ..., and a satellite-borne base station M (S-gNB_M)) sends statistical results of the measurement data corresponding to the first grid area to the MAE platform using an air interface protocol, so that the MAE platform integrates the statistical results of measurement data corresponding to the first grid area that are collected on the M satellite-borne base stations to obtain a performance indicator of the first grid area.

Optionally, an interface definition (or a grid-level performance indicator definition) of the air interface protocol may include a base station L3 service layer (or a control layer), a base station L2 service layer (or a data layer), and a base station L1 service layer (or a physical layer). The air interface protocol may be a protocol corresponding to a southbound interface. Therefore, the performance indicator of the first grid area is determined based on the measurement data that corresponds to the first grid area and collected by the plurality of satellite-borne base stations, to analyze network performance of the physical ground area corresponding to the first grid area.

In the foregoing method, the physical ground area is divided into grids, so that any area of the physical ground area is represented using a corresponding grid area. Based on this, for any grid area, the satellite-borne base station may determine measurement data of a terminal device in each grid area, to collect statistics on a corresponding performance indicator for the grid area, or collect statistics on a performance indicator at grid granularity, which is equivalent to collecting statistics on a performance indicator for a fixed physical ground area.

It should be further noted that each step in the foregoing embodiments or examples may be performed by a corresponding device, or may be performed by a component such as a module, a chip, a processor, or a chip system in the device. This is not limited in embodiments of this application. The foregoing embodiments are described only by using an example in which each step is performed by the corresponding device. In addition, specific implementations or examples in the foregoing embodiments constitute no limitation on the solutions provided in embodiments of this application.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

It may be understood that, the network architecture and the application scenarios described in embodiments of this application are intended to describe the technical solutions in embodiments of the present invention more clearly, but do not constitute a limitation on the technical solutions provided in embodiments of the present invention. A person of ordinary skill in the art may be aware that, with evolution of the network architecture and emergence of a new service, the technical solutions provided in embodiments of the present invention are also applicable to a similar technical problem.

It should be noted that the "step" in embodiments of this application is merely an example, is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on the same technical concept, this application further provides an apparatus. The apparatus may be used in the communication system shown in FIG. 3. The apparatus is configured to implement the method provided in the foregoing embodiments, and the apparatus may be used in the satellite-borne base station in the foregoing embodiments. Refer to FIG. 10. The communication apparatus 1000 includes a communication unit 1001 and a processing unit 1002.

The communication unit 1001 is configured to receive and send data, and support the communication apparatus 1000 in communicating with another device.

The processing unit 1002 is configured to control and manage an action of the communication apparatus 1000, and perform the steps performed by the satellite-borne base station in the communication method provided in the foregoing embodiments or examples.

Optionally, the communication apparatus 1000 further includes a storage unit, configured to store program code and/or data of the communication apparatus 1000.

The communication unit 1001 may be referred to as an input/output unit, a transceiver unit, or the like. The communication unit 1001 may be a transceiver or a communication interface. The processing unit 1002 may be a processor. When the communication apparatus 1000 is a module (for example, a chip) in a communication device, the communication unit 1001 may be an input/output interface, an input/output circuit, an input/output pin, or the like, and may also be referred to as an interface, a communication interface, an interface circuit, or the like. The processing unit 1002 may be a processor, a processing circuit, a logic circuit, or the like.

In an implementation, the communication apparatus 1000 may be applied to the first satellite-borne base station in the embodiment shown in FIG. 6. The processing unit 1002 is configured to:
determine a first grid area in which a first terminal device accessing a first satellite-borne base station is located, where the first grid area is a physical ground area; obtain, via the communication unit 1001, measurement data corresponding to the first terminal device, where the measurement data corresponds to the first grid area; collect statistics on measurement data of N terminal devices corresponding to the first grid area within a first time period, to obtain a statistical result of the measurement data corresponding to the first grid area, where the N terminal devices include the first terminal device, and N is an integer greater than or equal to 1; and send, via the communication unit 1001, the statistical result of the measurement data corresponding to the first grid area to a first device.

Optionally, the processing unit 1002 is further configured to:
determine an identifier of a first cell to which the first terminal device is connected; and determine, based on first mapping relationship information, an identifier of the first grid area corresponding to the identifier of the first cell, where the first mapping relationship information indicates a correspondence, at different time, between an identifier of a cell of the first satellite-borne base station and a grid area, and the identifier of the cell of the first satellite-borne base station remains unchanged.

Optionally, the first mapping relationship information is determined based on ephemeris information of a satellite on which the first satellite-borne base station is located.

Optionally, the processing unit 1002 is further configured to:
determine an identifier of a first cell to which the first terminal device is connected; and determine, based on second mapping relationship information, an identifier of the first grid area corresponding to the identifier of the first cell, where the second mapping relationship information indicates a correspondence, at different time, between an identifier of a cell of the first satellite-borne base station and a grid area, and the identifier of the cell of the first satellite-borne base station is associated with a position of the first satellite-borne base station.

Optionally, the second mapping relationship information is determined based on ephemeris information of a satellite on which the first satellite-borne base station is located.

Optionally, the first grid area is greater than or equal to a coverage area of a single beam of the first satellite-borne base station.

Optionally, the communication unit 1001 is further configured to:
send a measurement request message to the first terminal device; and receive the measurement data sent by the first terminal device.

Optionally, the measurement data corresponding to the first terminal device includes one or more of the following:
hardware measurement data, indicating hardware performance or a hardware capability of the first terminal device;
transmission measurement data, indicating data transmission performance between the first terminal device and the first satellite-borne base station; and
cell measurement data, indicating network communication performance of a cell of the first satellite-borne base station.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

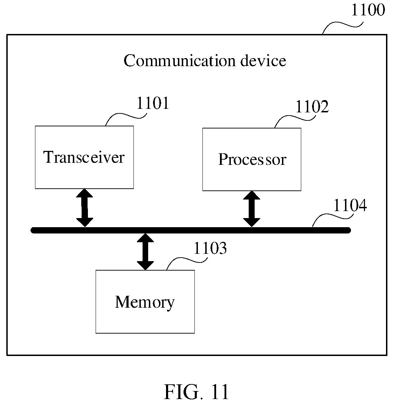

Based on the foregoing embodiments, an embodiment of this application further provides a device. The device may be the network device in the system shown in FIG. 3. The device can implement the methods in the foregoing embodiments, and has a function of the communication apparatus 1000. Refer to FIG. 11. The communication device 1100 includes a transceiver 1101, a processor 1102, and a memory 1103. The transceiver 1101, the processor 1102, and the memory 1103 are connected to each other.

Optionally, the transceiver 1101, the processor 1102, and the memory 1103 are connected to each other by using a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The transceiver 1101 is configured to receive and send signals, to implement communication with another device.

For a function of the processor 1102, refer to the descriptions in the foregoing embodiments. Details are not described herein again.

The processor 1102 may be a central processing unit (central processing unit, CPU), a network processor (network processor, NP), a combination of a CPU and an NP, or the like. The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. The processor 1102 may implement the foregoing functions using hardware or certainly using hardware executing corresponding software. The steps in the methods disclosed with reference to embodiments of this application may be directly performed and completed by the processor 1102, or may be performed and completed by a combination of hardware and software modules in the processor 1102.

The memory 1103 is configured to store program instructions, data, and the like. Specifically, the program instructions may include program code. The program code includes computer operation instructions. The memory 1103 may include a volatile memory (volatile memory), for example, a random access memory (random access memory, RAM), or may further include a non-volatile memory (non-volatile memory), for example, at least one magnetic disk memory, a hard disk drive (hard disk drive, HDD), or a solid-state drive (solid-state drive, SSD). Alternatively, the memory 1103 may be any other medium that can be configured to carry or store program code in a form of instructions or a data structure and can be accessed by a computer. This is not limited in this application. The processor 1102 executes the program instructions stored in the memory 1103, to implement the foregoing functions, thereby implementing the methods provided in the foregoing embodiments.

Based on the foregoing embodiments, an embodiment of this application further provides a computer program product. The computer program product includes a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program, and when the computer program is executed by a computer, the computer is enabled to perform the methods provided in the foregoing embodiments.

Optionally, the computer may include but is not limited to a communication device such as a terminal device or a network device.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the methods provided in the foregoing embodiments. Optionally, the chip may include a processor. The processor is coupled to the memory, and is configured to read the computer program stored in the memory, to implement the methods provided in the foregoing embodiments. Optionally, the chip may further include components such as the memory, a communication interface, and a power supply module. The memory is configured to store the computer program, the communication interface is configured to receive and send data, and the power supply unit is configured to supply power to the processor.

Based on the foregoing embodiments, an embodiment of this application provides a chip system. The chip system includes a processor, configured to support a computer apparatus in implementing a function related to the terminal device in the foregoing embodiments. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a first satellite-borne base station, and comprising:
determining a first grid area in which a first terminal device accessing the first satellite-borne base station is located, wherein the first grid area is a physical ground area;
obtaining measurement data corresponding to the first terminal device, wherein the measurement data corresponds to the first grid area;
collecting statistics on measurement data of N terminal devices corresponding to the first grid area within a first time period, to obtain a statistical result of the measurement data corresponding to the first grid area, wherein the N terminal devices comprise the first terminal device, and N is an integer greater than or equal to 1; and
sending the statistical result of the measurement data corresponding to the first grid area to a first device.

2. The method according to claim 1, wherein determining the grid area in which the terminal device accessing the first satellite-borne base station is located comprises:
determining an identifier of a first cell to which the first terminal device is connected; and
determining, based on first mapping relationship information, an identifier of the first grid area corresponding to the identifier of the first cell, wherein the first mapping relationship information indicates a correspondence, at different time, between an identifier of a cell of the first satellite-borne base station and a grid area, and the identifier of the cell of the first satellite-borne base station remains unchanged.

3. The method according to claim 2, wherein the first mapping relationship information is determined based on ephemeris information of a satellite on which the first satellite-borne base station is located.

4. The method according to claim 1, wherein determining the grid area in which the terminal device accessing the first satellite-borne base station is located comprises:
determining an identifier of a first cell to which the first terminal device is connected; and
determining, based on second mapping relationship information, an identifier of the first grid area corresponding to the identifier of the first cell, wherein the second mapping relationship information indicates a correspondence, at different time, between an identifier of a cell of the first satellite-borne base station and a grid area, and the identifier of the cell of the first satellite-borne base station is associated with a position of the first satellite-borne base station.

5. The method according to claim 4, wherein the second mapping relationship information is determined based on ephemeris information of a satellite on which the first satellite-borne base station is located.

6. The method according to any one of claims 1 to 5, wherein the first grid area is greater than or equal to a coverage area of a single beam of the first satellite-borne base station.

7. The method according to claim 1, wherein obtaining the measurement data corresponding to the first terminal device comprises:
sending a measurement request message to the first terminal device; and
receiving the measurement data sent by the first terminal device.

8. The method according to any one of claims 1 to 7, wherein the measurement data corresponding to the first terminal device comprises one or more of the following:
hardware measurement data, indicating hardware performance or a hardware capability of the first terminal device;
transmission measurement data, indicating data transmission performance between the first terminal device and the first satellite-borne base station; and
cell measurement data, indicating network communication performance of the cell of the first satellite-borne base station.

9. An apparatus, comprising a communication unit and a processing unit, wherein
the communication unit is configured to receive and send data; and
the processing unit is configured to: determine a first grid area in which a first terminal device accessing a first satellite-borne base station is located, wherein the first grid area is a physical ground area;
obtain, via the communication unit, measurement data corresponding to the first terminal device, wherein the measurement data corresponds to the first grid area;
collect statistics on measurement data of N terminal devices corresponding to the first grid area within a first time period, to obtain a statistical result of the measurement data corresponding to the first grid area, wherein the N terminal devices comprise the first terminal device, and N is an integer greater than or equal to 1; and
send, via the communication unit, the statistical result of the measurement data corresponding to the first grid area to a first device.

10. The apparatus according to claim 9, wherein the processing unit is further configured to:
determine an identifier of a first cell to which the first terminal device is connected; and
determine, based on first mapping relationship information, an identifier of the first grid area corresponding to the identifier of the first cell, wherein the first mapping relationship information indicates a correspondence, at different time, between an identifier of a cell of the first satellite-borne base station and a grid area, and the identifier of the cell of the first satellite-borne base station remains unchanged.

11. The apparatus according to claim 10, wherein the first mapping relationship information is determined based on ephemeris information of a satellite on which the first satellite-borne base station is located.

12. The apparatus according to claim 9, wherein the processing unit is further configured to:
determine an identifier of a first cell to which the first terminal device is connected; and
determine, based on second mapping relationship information, an identifier of the first grid area corresponding to the identifier of the first cell, wherein the second mapping relationship information indicates a correspondence, at different time, between an identifier of a cell of the first satellite-borne base station and a grid area, and the identifier of the cell of the first satellite-borne base station is associated with a position of the first satellite-borne base station.

13. The apparatus according to claim 12, wherein the second mapping relationship information is determined based on ephemeris information of a satellite on which the first satellite-borne base station is located.

14. The apparatus according to any one of claims 9 to 12, wherein the first grid area is greater than or equal to a coverage area of a single beam of the first satellite-borne base station.

15. The apparatus according to claim 9, wherein the communication unit is further configured to:
send a measurement request message to the first terminal device; and
receive the measurement data sent by the first terminal device.

16. The apparatus according to any one of claims 9 to 15, wherein the measurement data corresponding to the first terminal device comprises one or more of the following:
hardware measurement data, indicating hardware performance or a hardware capability of the first terminal device;
transmission measurement data, indicating data transmission performance between the first terminal device and the first satellite-borne base station; and
cell measurement data, indicating network communication performance of the cell of the first satellite-borne base station.

17. A device, comprising:
a transceiver, configured to receive and send signals; and
a processor, configured to execute program instructions, to enable the communication device to perform the method according to any one of claims 1 to 8.

18. A computer-readable storage medium, wherein the computer-readable storage medium stores a computer program, and when the computer program is run on a computer, the computer is enabled to perform the method according to any one of claims 1 to 8.

19. A chip, wherein the chip is coupled to a memory, and is configured to read and execute program instructions stored in the memory, to implement the method according to any one of claims 1 to 8.

20. A computer program product, wherein when the computer program product is executed by a computer, the computer is enabled to perform the method according to any one of claims 1 to 8.
